# EUROPEAN PATENT APPLICATION

(11) **EP 2 921 949 A1**
(43) Date of publication of application: **23.09.2015**
(21) Application number: 14868719.7
(22) Date of filing: 21.11.2014
(51) Int. Cl.: G06F 3/12, B41J 29/38

(54) **PRINTING SYSTEM, PRINT SERVER AND METHOD FOR SUBMITTING PRINT JOBS**

(30) Priority: 07.01.2014 JP 2014000943
(71) Applicant: WingArc1st Inc., Shibuya-ku, Tokyo 150-0031 (JP)
(72) Inventor: SHIMAZAWA, Ko, Tokyo 1500031 (CN); WATANABE, Hironori, Tokyo 1500031 (CN)
(74) Representative: Vossius & Partner Patentanwälte Rechtsanwälte mbB
(86) International application number: PCT/JP2014/080850
(87) International publication number: WO 2015/104906

(57) **Abstract**

There are provided a receipt completion deciding unit 22 for deciding whether receipt of a print job is completed or not and a print job transferring unit 23 for transferring a print job of a non-received part to a print server other than a self server. In the case in which transmission of the print job to either of print servers 200₋₁ and 200₋₂ is delayed because of a difference in a transmission speed of the print job to the print servers, the print job in the non-received part is transferred to the other print server from the print server completing the receipt of the print job earlier. Consequently, the receipt of the print job in the other print server can be completed earlier as compared with the case in which the print job in the non-received part is continuously populated from a client terminal 100 to the other print server at a lower transmission speed.

## Description

### [Technical Field]

The present invention relates to a print system, a print server and a method of populating a print job, and more particularly, is suitably used for a print system in a cluster environment having a plurality of print servers.

### [Background Art]

Conventionally, there is provided a print system for clustering a plurality of print servers (for example, see Patent Document 1). Referring to the print system of this type, in the case in which a trouble occurs in a single print server, a backup print server takes over and executes a print job managed by the print server in which the trouble occurs.

Moreover, there is also provided a print system which has a plurality of clustered printers for carrying out proxy print in another printer when a failure occurs in any of the printers which is being used (for example, see Patent Document 2). In the image processing system described in the Patent Document 2, the print server has the function for causing the image processing apparatuses (composite machines) to share and execute a single job and causes the image processing apparatuses to execute one of the distributed print jobs. When there is brought a situation in which the distributed print job cannot be executed by one of the image processing apparatuses, the image processing apparatus transfers the job received from the print server (an allocated job of the distributed print) to another image processing apparatus and executes the job.

[Patent Document 1] Japanese Laid-Open Patent Publication No. 2009 - 151470
[Patent Document 2] Japanese Laid-Open Patent Publication No. 2013 - 105290

### [Disclosure of the Invention]

In the case in which a plurality of print servers or a plurality of printers is clustered to build a print system, it is demanded to continuously execute print without stoppage when a failure occurs in any of the print servers or printers. Referring to the systems described in the Patent Documents 1 and 2, however, it is necessary to transfer a print job from the print server in which the failure occurs to another print server or from a printer (an image processing apparatus) in which a failure occurs to another printer. There is a problem in that the print is temporarily stopped in the meantime.

It can be supposed to solve such a problem by the following technique. In other words, a print job generated in a client terminal is populated into two print servers and an instruction for executing print is given to the printer based on the print job in one of the print servers which is specified mainly in charge. When there is detected occurrence of a failure in the print server that is executing the print, then, an instruction for executing print is given to the printer in accordance with an already populated print job in the print server other than the print server in which the failure occurs.

When a failure occurs in the print server that is executing the print job, thus, the execution of the print job is taken over in another print server which has already populated the same print job as the print job that is being executed by the print server. When the print job is taken over according to the occurrence of the failure, consequently, it is possible to continuously execute the print without transferring the print job to another print server from the print server having the occurrence of the failure.

In the case in which the print job relates to print for a large number of pages or images or the like, however, a data volume of the print job itself is increased. In this case, a time is taken for transmitting the print job from the client terminal to the print server. In the case in which the print job is transmitted from the client terminal to the two print servers as described above, there is a possibility of occurrence of a state in which the print job is transmitted late to the print server in main charge and the print cannot be started because of a difference in a transmission speed of the print job with respect to both of the servers. In this case, there is a problem in that a long time is taken for actually starting the print after giving the instruction for executing the print through the client terminal.

In order to solve the problems, it is an object of the present invention to shorten a time taken for transmitting a print job to a plurality of print servers and then starting print after giving an instruction for executing the print through a client terminal in a print system for transmitting a print job from the client terminal to the print servers.

In order to attain the object, in the present invention, it is decided whether receipt of a print job is completed in at least two print servers in which a print job is populated from a client terminal. If one of the servers decides that the receipt of the print job is completed, the server transfers a print job of a non-received part in a print server other than the self server to the other print server.

According to the present invention having the structure described above, when the print job is to be populated from the client terminal to at least two print servers, the print job of the non-received part is transferred from the print server which has completely received the print job earlier to another print server which has not completed the receipt in the case in which the print job is transmitted late to any of the print servers because of a difference in a transmission speed of the print job to each of the servers. For example, in the case in which the print job is transmitted late to any of the print servers which is specified mainly in charge, the print job of the non-received part is transferred from the print server which has completely received the print job earlier to the print server in the main charge which has not completed the receipt yet.

In this case, if the print job of the non-received part is not continuously populated at a low transmission speed from the client terminal to the print server in the main charge but is transferred between the print servers, there is a higher possibility that the receipt of the print job in the print server in the main charge might be completed earlier. Consequently, it is possible to shorten a time required for completely populating the print job from the client terminal into the print server in the main charge. Accordingly, it is possible to shorten a time taken for giving an instruction to execute the print through the client terminal and then transmitting a print job to the print server and starting the print.

### [Brief Description of the Drawings]

FIG. 1 is a diagram showing an example of a structure of a print system according to the present embodiment.
FIG. 2 is a diagram showing an example of a functional structure of the print system according to the present embodiment.
FIG. 3 is a flowchart showing an example of an operation of the print system according to the present embodiment.

### [Best Mode for Carrying Out the Invention]

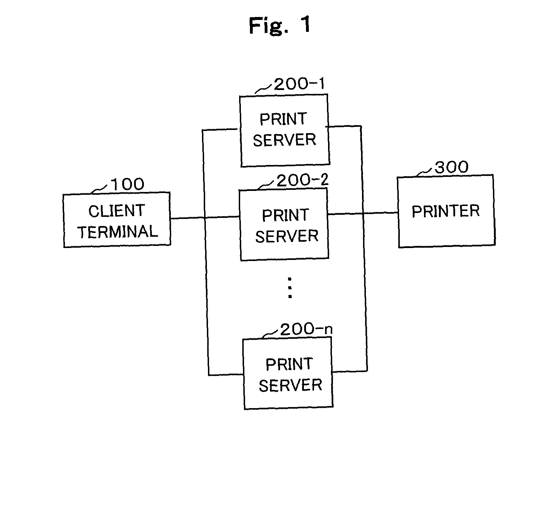

An embodiment of the present invention will be described below with reference to the drawings. FIG. 1 is a diagram showing an example of a structure of a print system according to the present embodiment. As shown in FIG. 1, the print system according to the present embodiment is a print system in a cluster environment including a plurality of print servers and is configured from a client terminal 100, n print servers 200₋₁, 200₋₂, ··· 200-n (hereinafter referred to as a print server 200), and a printer 300.

The client terminal 100 and the print servers 200, the print servers 200, and the print servers 200 and the printer 300 are connected through communication networks, respectively. The communication network may be a LAN (Local Area Network) or a WAN (Wide Area Network), for example.

In the print system according to the present embodiment, the print job generated in the client terminal 100 is populated into at least two of the print servers 200 and an instruction for executing print based on the print job is given to the printer 300 from one of the print servers 200. In the case in which there is detected occurrence of a failure in the print server that is executing the print, then, the print server other than the print server causing the failure gives the printer 300 an instruction for executing the print in accordance with a print job which has already been populated.

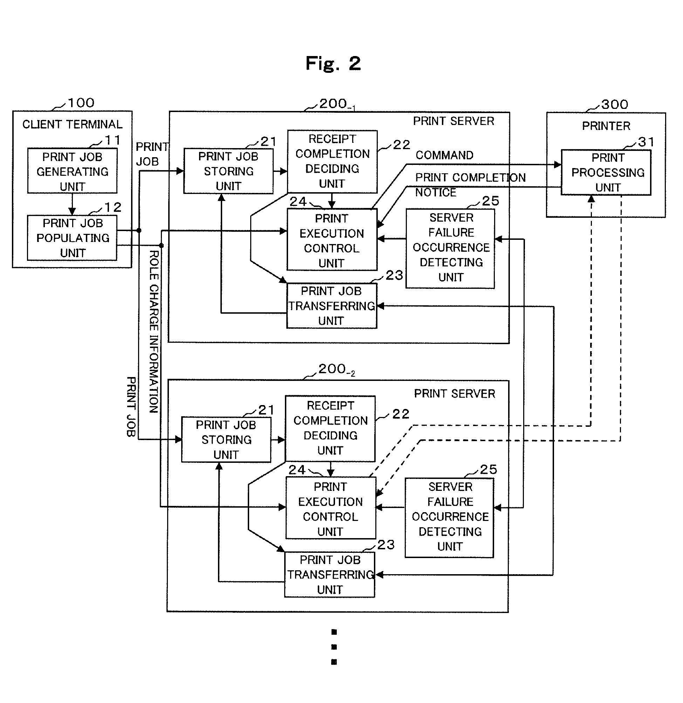

FIG. 2 is a block diagram showing an example of a functional structure of the print system according to the present embodiment. As shown in FIG. 2, the client terminal 100 includes a print job generating unit 11 and a print job populating unit 12 as a functional structure thereof. Moreover, the print server 200 includes, as a functional structure thereof, a print job storing unit 21, a receipt completion deciding unit 22, a print job transferring unit 23, a print execution control unit 24 and a server failure occurrence detecting unit 25. Moreover, the printer 300 includes a print processing unit 31 as a functional structure thereof.

Each function of the client terminal 100 can be configured from any of hardware, a DSP (Digital Signal Processor) and software. For example, in the case in which the function is configured from the software, it actually includes a CPU, an RAM, an ROM and the like in a computer and is implemented by an operation of a program stored in a recording medium such as the RAM, the ROM, a hard disk, a semiconductor memory or the like.

Respective functions of the print server 200 and the printer 300 are also the same. In other words, these functions can also be configured from any of the hardware, the DSP and the software. For example, in the case in which the functions are configured from the software, they actually include a CPU, an RAM, an ROM and the like in a computer and are implemented by an operation of a program stored in a recording medium such as the RAM, the ROM, a hard disk, a semiconductor memory or the like.

The print job generating unit 11 generates a print job in accordance with a print instruction given from a user using the client terminal 100. For example, in the case in which an instruction for printing a document having a plurality of pages is given by the user, the print job generating unit 11 generates a print job having the pages.

The print job populating unit 12 populates the print job generated by the print job generating unit 11 into at least two of the n print servers 200. As an example, description will be given on the assumption that the print job is populated into the two print servers 200₋₁ and 200₋₂. In this case, the print job populating unit 12 populates the print job by setting one of the two print servers 200₋₁ and 200₋₂ into main charge and the other into auxiliary charge.

It is possible to determine, based on an optional rule, which two of the n print servers 200 should be selected and which of the two print servers 200 should be taken in the main charge. For example, the print servers 200₋₁ and 200₋₂ in the main charge and the auxiliary charge are determined in ascending order from the smallest processing load applied to the print server 200 when the print job is populated.

In this case, the print job populating unit 12 first transmits a request to all of the print servers 200 and receives index values representing a load situation from all of the print servers 200. The index value representing the load situation includes a usage rate of a CPU, a usage rate of a memory, an I/O level or the like. The print job populating unit 12 determines the print servers 200₋₁ and 200₋₂ in the main charge and the auxiliary charge in ascending order from the smallest processing load based on the index value of the load situation which is received from each of the print servers 200.

The print job populating unit 12 transmits the print job to the print servers 200₋₁ and 200₋₂ in the main charge and the auxiliary charge which are determined as described above. Moreover, the print job populating unit 12 transmits, to the print servers 200₋₁ and 200₋₂, allocation charge information indicating which of them is taken in the main charge or the auxiliary charge.

At this time, the print job populating unit 12 divides the print job into a plurality of blocks and sequentially populates them. A block dividing method can be determined optionally. For example, one page may be set to be one block or predetermined pages may be set to be one block. Alternatively, the block division may be made with a predetermined data volume set to be a unit regardless of the number of pages.

The print job storing unit 21 of the print server 200 temporarily stores the print job transmitted by the print job populating unit 12 of the client terminal 100 until the print is ended in the printer 300. In the present embodiment, the print job is transmitted from the client terminal 100 to the two print servers 200₋₁ and 200₋₂. For this reason, the same print job is stored in the print job storing units 21 of the two print servers 200₋₁ and 200₋₂.

However, the transmission speed of the print job from the client terminal 100 to the two print servers 200₋₁ and 200₋₂ is varied depending on a difference in the processing load in the two print servers 200₋₁ and 200₋₂, a difference in a communication load between the print servers 200₋₁ and 200₋₂ and the client terminal 100, or the like. For this reason, a time difference is made between the two print servers 200₋₁ and 200₋₂ until all of the blocks of the print job are transmitted and completely stored in the print job storing unit 21.

The receipt completion deciding unit 22 decides whether the print job populated from the client terminal 100 is completely received or not. More specifically, the receipt completion deciding unit 22 monitors the print job to be stored in the print job storing unit 21, thereby deciding whether all of the blocks of the print job are completely received or not.

For example, when dividing the print job into a plurality of blocks and populating them, the print job populating unit 12 adds an identifier indicative of a final block to the final block and populates the blocks. The receipt completion deciding unit 22 monitors whether the block having the identifier is stored in the print job storing unit 21 or not, thereby deciding whether the print job is completely received or not.

When dividing the print job into a plurality of blocks and populating them, alternatively, the print job populating unit 12 first may notify the two print servers 200₋₁ and 200₋₂ of the number of the divided blocks. The receipt completion deciding unit 22 may monitor whether the notified number of blocks are wholly stored in the print job storing unit 21 or not, thereby deciding whether the print job is completely received or not.

If the receipt completion deciding unit 22 decides that the print job is completely received, the print job transferring unit 23 transfers a print job of a non-received block in either of the two print servers 200₋₁ and 200₋₂ other than a self server to the other print server. For example, in the case in which the print server 200₋₁ in the main charge completely receives the print job earlier, the print job transferring unit 23 of the print server 200₋₁ in the main charge transfers the print job of the non-received block to the print job transferring unit 23 of the print server 200₋₂ in the auxiliary charge.

To the contrary, in the case in which the print server 200₋₂ in the auxiliary charge completely receives the print job earlier, the print job transferring unit 23 of the print server 200₋₂ in the auxiliary charge transfers the print job of the non-received block to the print job transferring unit 23 of the print server 200₋₁ in the main charge. Description will be given below by taking, as an example, the case in which the print server 200₋₂ in the auxiliary charge completely receives the print job earlier.

The print job transferring unit 23 can grasp which block is non-received in the print server 200₋₁ in the main charge by giving an inquiry from the print server 200₋₂ in the auxiliary charge to the print server 200₋₁ in the main charge. The print server 200₋₁ in the main charge receives the inquiry from the print server 200₋₂ in the auxiliary charge, thereby grasping that the print job is completely received earlier in the print server 200₋₂ in the auxiliary charge and responding to the print server 200₋₂ in the auxiliary charge as to which blocks are subjected to the complete receipt.

Moreover, the print job transferring unit 23 of the print server 200₋₁ in the main charge notifies the client terminal 100 of the start of the transfer of the print job to the self server. It is also possible to give, from the print server 200₋₂ in the auxiliary charge to the client terminal 100, a notice of the start of the transfer of the print job to the print server 200₋₁ in the main charge.

When the transfer of the print job is started through the print job transferring unit 23, the print job populating unit 12 of the client terminal 100 stops the print job population processing for another print server (the print server 200₋₁ in the main charge in the example described above). In other words, when the notice of the start of the transfer of the print job is given from the print server 200₋₁ in the main charge or the print server 200₋₂ in the auxiliary charge, the print job populating unit 12 stops the print job introduction processing for the print server 200₋₁ in the main charge acting as a transfer receiving side.

The notice of the completion of the receipt of the print job from the client terminal 100 in the print server 200₋₂ in the auxiliary charge may be given from the print server 200₋₂ in the auxiliary charge to the client terminal 100, and the print job populating unit 12 may stop the processing for populating the print job to the print server 200₋₁ in the main charge upon receipt of the notice.

The print job transferring unit 23 in the print server 200₋₁ in the main charge serving as a side where the transfer of the print job is received causes the print job storing unit 21 to store the transferred print job block subsequently to the print job block received from the client terminal 100. In the print server 200₋₁ in the main charge which receives the transfer of the print job, even if the print jobs in all of the blocks are completely stored in the print job storing unit 21, the processing for transferring the print job to the other print server through the print job transferring unit 23 is not carried out.

The print execution control unit 24 controls execution of print in the printer 300 based on the print job stored in the print job storing unit 21. More specifically, the print execution control unit 24 gives the printer 300 an instruction for executing the print, thereby receiving a print completion notice from the printer 300. The print processing unit 31 of the printer 300 executes the print in accordance with a command sent from the print server 200 and returns the print completion notice to the print server 200 when the print is ended.

In principle, only the print server 200₋₁ in the main charge into which the print job is populated by the print job populating unit 12 actually controls the execution of the print in the printer 300 by the print execution control unit 24. The print server 200₋₂ set into the auxiliary charge does not control the execution of the print with respect to the printer 300 even if the print job is stored in the print job storing unit 21. The print server 200₋₂ in the auxiliary charge controls the execution of the print when a failure occurs in the print server 200₋₁ in the main charge which is executing the print.

The server failure occurrence detecting unit 25 detects the occurrence of a failure in the print server 200. In the present embodiment, particularly, there is detected the occurrence of the failure in the print server 200₋₁ in the main charge. Herein, the failure implies a failure in which the print server 200₋₁ cannot continuously control the execution of the print with respect to the printer 300. Typically, a situation in which the print server 200₋₁ goes down or freezes and cannot be thus operated, a situation in which the print server 200₋₁ is disconnected from a communication network and cannot communicate, or the like corresponds to the failure.

For example, the server failure occurrence detecting units 25 of the respective print servers 200 always communicate with each other. When the server failure occurrence detecting unit 25 cannot communicate with a particular partner, it decides that a failure occurs in the print server 200 of the partner. In other words, when the print server 200₋₁ in the main charge and the print server 200₋₂ in the auxiliary charge always communicate with each other, the print server 200₋₂ in the auxiliary charge cannot communicate with the print server 200₋₁ in the main charge if a failure occurs in the print server 200₋₁ in the main charge. In this case, the server failure occurrence detecting unit 25 of the print server 200₋₂ in the auxiliary charge decides that a failure occurs in the print server 200₋₁ in the main charge.

In the case in which the occurrence of the failure in the print server 200₋₁ in the main charge is detected by the server failure occurrence detecting unit 25 of the print server 200₋₂ in the auxiliary charge, the print execution control unit 24 of the print server 200₋₂ in the auxiliary charge gives the printer 300 an instruction for executing print based on the print job stored in the print job storing unit 21.

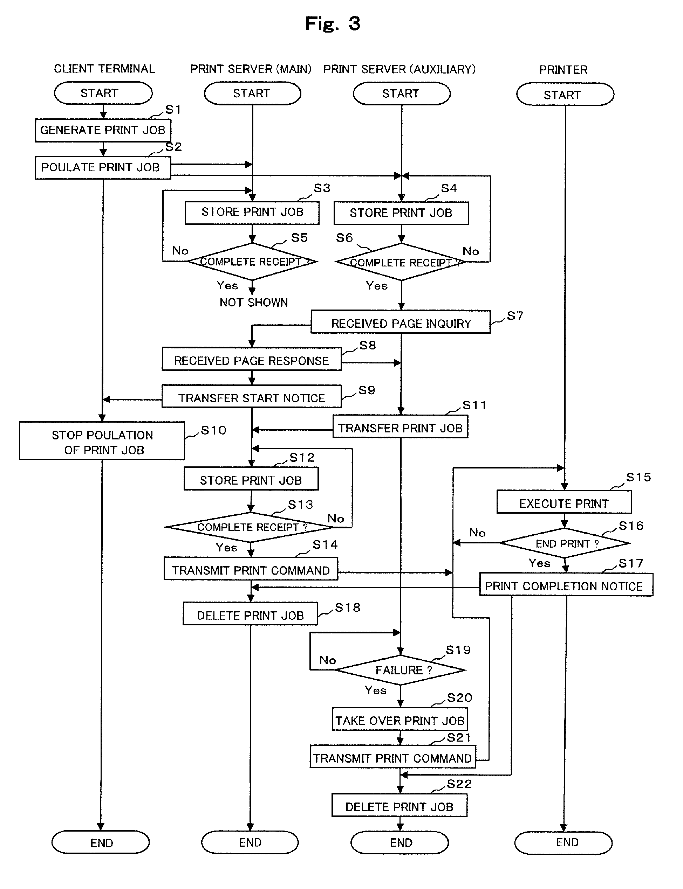

FIG. 3 is a flowchart showing an example of an operation of a print system according to the present embodiment having the structure described above. The flowchart shown in FIG. 3 is started when an instruction for executing print is given in the client terminal 100. First of all, the print job generating unit 11 of the client terminal 100 generates a print job in accordance with a print instruction given from a user (Step S1).

Then, the print job populating unit 12 specifies the two print servers 200₋₁ and 200₋₂ from n print servers 200 so as to be taken in main charge and auxiliary charge respectively, and sequentially populates print jobs generated by the print job generating unit 11 into the two specified print servers 200₋₁ and 200₋₂ on a block unit (Step S2). At this time, the print job populating unit 12 also transmits, to the print servers 200₋₁ and 200₋₂, allocation charge information indicating which of them is taken in the main charge or the auxiliary charge.

The two print servers 200₋₁ and 200₋₂ cause the print job storing unit 21 to sequentially store the print jobs populated by the print job populating unit 12 of the client terminal 100 on a block unit (Steps S3 and S4). The receipt completion deciding unit 22 monitors the print job to be stored in the print job storing unit 21, thereby deciding whether all of the blocks of the print job are completely received or not (Steps S5 and S6). As an example, it is assumed that the print server 200₋₂ in the auxiliary charge completes the receipt of the print job earlier than the print server 200₋₁ in the main charge.

In this case, the print job transferring unit 23 of the print server 200₋₂ in the auxiliary charge gives the print server 200₋₁ in the main charge an inquiry as to which block has already been received in the print server 200₋₁ in the main charge (Step S7). The print server 200₋₁ in the main charge gives the print server 200₋₂ in the auxiliary charge a response as to which blocks have already been received completely (Step S8), and notifies of the start of the transfer of the print job to the self server to the client terminal 100 (Step S9).

Upon receipt of the notice, the print job populating unit 12 of the client terminal 100 stops the processing for populating a print job into the print server 200₋₁ in the main charge (Step S10). On the other hand, the print job transferring unit 23 of the print server 200₋₂ in the auxiliary charge transfers a print job of a non-received block to the print job transferring unit 23 of the print server 200₋₁ in the main charge (Step S11). The print server 200₋₁ in the main charge causes the print job storing unit 21 to sequentially store the block of the print job transferred from the print server 200₋₂ in the auxiliary charge (Step S12).

The receipt completion deciding unit 22 in the print server 200₋₁ in the main charge monitors the print job to be stored in the print job storing unit 21, thereby deciding whether all of the blocks of the print job are completely received or not (Step S13). If it is decided that all of the blocks of the print job are completely received, the print execution control unit 24 of the print server 200₋₁ in the main charge transmits, to the printer 300, a command for giving an instruction to execute print based on the print job stored in the print job storing unit 21 (Step S14).

The print processing unit 31 of the printer 300 executes the print in accordance with a command sent from the print server 200₋₁ (Step S15). Then, the print processing unit 31 decides whether the print for all pages based on the print job is ended or not (Step S16). If the print for the all pages has not been ended yet, the processing returns to the Step S15 and the print is continuously executed. Moreover, the print processing unit 31 transmits a print completion notice to the print server 200₋₁ in the main charge when the print for the all pages is ended (Step S17).

In the print servers 200₋₁ in the main charge, the print execution control unit 24 deletes the print job from the print job storing unit 21 upon receipt of the print completion notice from the printer 300 (Step S18), and the processing of the flowchart shown in FIG. 3 is ended. Also in the print server 200₋₂ in the auxiliary charge, the print execution control unit 24 deletes the print job from the print job storing unit 21 upon receipt of the print completion notice from the printer 300 or the print server 200₋₁ in the main charge, which is not shown in FIG. 3.

In a state in which the print for the all pages based on the print job has not been ended yet, the server failure occurrence detecting unit 25 of the print server 200₋₂ in the auxiliary charge decides whether a failure occurs in the print server 200₋₁ in the main charge or not (Step S19). If it is decided that the failure occurs in the print server 200₋₁ in the main charge, the print execution control unit 24 of the print server 200₋₂ in the auxiliary charge takes over the execution of the print job by using the print job stored in the print job storing unit 21 (Step S20).

The print execution control unit 24 of the print server 200₋₂ in the auxiliary charge which takes over the print job transmits, to the printer 300, a command for giving an instruction to execute the print (Step S21). The print processing unit 31 of the printer 300 executes the print in accordance with a command sent from the print server 200₋₂ in the auxiliary charge (Step S15) and returns the print completion notice to the print server 200₋₂ in the auxiliary charge when the print is ended (Step S17). In the print server 200₋₂ in the auxiliary charge, the print execution control unit 24 deletes the print job from the print job storing unit 21 upon receipt of the print completion notice from the printer 300 (Step S22), and the processing of the flowchart shown in FIG. 3 is ended.

In the flowchart of FIG. 3, the description has been given on the assumption that the print server 200₋₂ in the auxiliary charge completes the receipt of the print job from the client terminal 100 earlier than the print server 200₋₁ in the main charge. In a reverse case thereto, when the receipt of the print job is completed in the print server 200₋₁ in the main charge, an instruction for executing the print is given to the printer 300 and a print job of a non-received block is transferred to the print server 200₋₂ in the auxiliary charge.

As described above in detail, in the present embodiment, it is decided whether the receipt of the print job is completed or not in the two print servers 200₋₁ and 200₋₂ into which the print job is populated from the client terminal 100. If one of the servers decides that the receipt of the print job is completed, the server transfers a print job of a non-received block in the print server other than the self server to the other print server.

According to the present embodiment thus configured, when the print job is to be populated from the client terminal 100 into the two print servers 200₋₁ and 200₋₂, a print job of the non-received part is transferred from the print server 200₋₂ in the auxiliary charge which has completed the receipt of the print job earlier to the print server 200₋₁ in the main charge which has not completed the receipt yet if the transmission of the print job to the print server 200₋₁ in the main charge is delayed because of a difference in the transmission speed of the print job to each of the print servers 200₋₁ and 200₋₂.

In this case, there is a higher possibility that the receipt of the print job in the print server 200₋₁ in the main charge might be completed earlier if the print job of the non-received part is not continuously populated from the client terminal 100 into the print server 200₋₁ in the main charge at a lower transmission speed but the print job of the non-received part is transferred between the two print servers 200₋₁ and 200₋₂. Consequently, it is possible to shorten a time required for completely populating the print job from the client terminal 100 into the print server 200₋₁ in the main charge. Accordingly, it is possible to shorten a time required for giving the instruction for executing the print through the client terminal 100 and then transmitting the print job to at least the print server 200₋₁ in the main charge to start the print.

Although the description has been given to the example in which the client terminal 100 determines the populating destination of the print job in the embodiment, the present invention is not restricted thereto. For example, a terminal for monitoring the load situation of the print server 200 may be provided between the client terminal 100 and the n print servers 200 to determine the populating destination of the print job through the terminal.

In the embodiment, moreover, the instruction for executing print may be given from a non-printed page to the printer 300 when the print server 200₋₂ in the auxiliary charge takes over the print job from the print server 200₋₁ in the main charge. For example, there is managed a status as to whether the print processing is ended on a page unit in the printer 300 or not and an inquiry of the status is given to the printer 300 to make confirmation when the print server 200₋₂ in the auxiliary charge takes over the print job. Consequently, the instruction for executing the print is given to the printer 300 from a next non-printed page to a page printed completely before the occurrence of the failure in the print server 200₋₁ in the main charge.

Every time the status is updated, alternatively, a notice of the status information managed on the page unit in the printer 300 as described above is given to the print server 200₋₁ in the main charge and the status information is also shared by the print server 200₋₂ in the auxiliary charge. When the print server 200₋₂ in the auxiliary charge takes over the print job, the shared status may be confirmed to give the printer 300 the instruction for executing the print on a next non-printed page to the page subjected to the completion of the print before the occurrence of the failure in the print server 200₋₁ in the main charge.

In addition, the embodiment is only illustrative for concreteness to carry out the present invention and the technical scope of the present invention should not be thereby construed to be restrictive. In other words, the present invention can be carried out in various configurations without departing from the gist or main features thereof.

### [Explanation of Designation]

- 12: print job populating unit
- 21: print job storing unit
- 22: receipt completion deciding unit
- 23: print job transferring unit
- 24: print execution control unit
- 25: server failure occurrence detecting unit
- 31: print processing unit
- 100: client terminal
- 200: print server
- 300: printer

## Claims

1. A print system comprising:
a print job populating unit for populating a print job generated in a client terminal into at least two of print servers;
a receipt completion deciding unit for deciding whether the print job populated from the client terminal is completely received in the print server or not; and
a print job transferring unit for transferring a print job of a non-received part in a print server other than a self server in the at least two print servers to the other print server if the receipt completion deciding unit decides that the receipt of the print job is completed in the self server.

2. The print system according to claim 1, wherein the print job populating unit divides the print job into a plurality of blocks and sequentially populates them,
the receipt completion deciding unit decides whether all blocks of the print job are completely received or not, and
the print job transferring unit transfers a print job of a non-received block in the other print server to the other print server if the receipt completion deciding unit decides that the receipt of the print job is completed.

3. The print system according to claim 1, wherein the print job populating unit stops processing for populating the print job into the other print server when the transfer of the print job to the other print server is started by the print job transferring unit.

4. A print server to be used in a print system for populating a print job generated in a client terminal into at least two of print servers in a cluster environment having the print servers, the print server comprising:
a receipt completion deciding unit for deciding whether receipt of the print job populated from the client terminal is completed or not; and
a print job transferring unit for transferring a print job of a non-received part in a print server other than a self server in the at least two print servers to the other print server if the receipt completion deciding unit decides that the receipt of the print job is completed in the self server.

5. The print server according to claim 4, wherein the receipt completion deciding unit decides whether all blocks of the print job obtained by division into the blocks and populated sequentially from the client terminal are completely received or not, and
the print job transferring unit transfers a print job of a non-received block in the other print server to the other print server if the receipt completion deciding unit decides that the print job is completely received.

6. A method of populating a print job generated in a client terminal into at least two of print servers in a cluster environment having the print servers, the method comprising:
a first step of causing a receipt completion deciding unit of the print server to decide whether receipt of the print job populated from the client terminal is completed or not; and
a second step of causing a print job transferring unit of the print server to transfer a print job of a non-received part in a print server other than a self server in the at least two print servers to the other print server if the receipt completion deciding unit decides that the receipt of the print job is completed in the self server.
